# DEMANDE DE BREVET EUROPEEN

(11) **EP 3 731 363 A1**
(43) Date de publication de la demande: **28.10.2020**
(21) Numéro de dépôt: 19170980.7
(22) Date de dépôt: 25.04.2019
(51) Int. Cl.: H02J 3/32, H02J 3/38, H02J 3/06

(54) **SYSTÈME ET MÉTHODE DE DISTRIBUTION D'ÉNERGIE ÉLECTRIQUE**

(71) Demandeur: Homsphere SA, 1204 Genève (CH)
(72) Inventeur: François, BIRLING, 1400 Cheseaux Noréaz (CH); Jean-François, AFFOLTER, 1400 1400 Yverdon-les-bains (CH); Georges, BERWEILER, 1262 Eysins (CH)
(74) Mandataire: KATZAROV S.A.

(57) **Abrégé**

L'invention concerne un système pour gérer la distribution d'énergie électrique entre au moins deux bâtiments distincts comprenant chacun un réseau domestique connecté à un réseau local, ledit réseau local étant connecté à un réseau public. Chaque bâtiment comprend une source d'énergie, un onduleur relié à ladite source d'énergie, une batterie alimentée par l'onduleur, et au moins un équipement fonctionnant grâce à l'énergie du réseau domestique. Le système comprend dans chaque bâtiment un module domestique pour réguler le flux d'énergie circulant dans le réseau domestique. Le système comprend en outre un module central connecté à chaque module domestique permettant de réguler le flux d'énergie entre le réseau local et le réseau public, ledit module central étant arrangé pour réguler le flux d'énergie entre les bâtiments pour permettre un échange d'énergie entre un réseau domestique en excès et un réseau domestique en déficit.

## Description

### DOMAINE TECHNIQUE DE L'INVENTION

L'invention concerne un système de distribution d'énergie électrique ainsi qu'une méthode utilisant le système selon l'invention. L'invention concerne également une méthode mise en oeuvre par ordinateur et un programme d'ordinateur.

### ETAT DE LA TECHNIQUE

Les smart grid ou réseaux intelligents (également appelés microgrid) sont des systèmes de distribution d'énergie qui visent à optimiser la consommation d'énergie entre plusieurs bâtiments. Pour cela, une partie des besoins en énergie est fournie par une source d'énergie locale.

Les réseaux intelligents ont notamment été développés pour pallier les difficultés d'approvisionnement en énergie de certaines régions du monde. Aujourd'hui encore, 17 % de la population mondiale vit sans accès à l'électricité. Grâce aux réseaux intelligents, des solutions peuvent être mises en oeuvre en faveur de l'électrification de ces régions.

Un réseau intelligent est communément composé d'un générateur d'énergie renouvelable, un générateur d'énergie utilisant une énergie fossile, des moyens de stockage de l'énergie, et d'un réseau de distribution local. Les habitations, les générateurs et la solution de stockage sont connectés sur le réseau local.

L'énergie fournie aux habitations est préférentiellement de l'énergie issue du générateur utilisant une énergie renouvelable, par exemple des panneaux solaires. Si cet approvisionnement ne suffit pas à couvrir les besoins en énergie, le générateur utilisant une énergie fossile permet d'éviter les coupures d'électricité.

Cependant, un des inconvénients des microgrids existants est que les sources d'énergies et les moyens de stockages sont mutualisés. Autrement dit, les microgrids existants ne tiennent pas compte des habitudes de consommation de chaque habitation pour optimiser la distribution et minimiser le recours à l'énergie fossile et/ou nucléaire

### OBJET DE L'INVENTION

Un objet de la présente invention est donc de résoudre les problèmes décrits ci-dessus, et plus particulièrement de fournir un système et un procédé de distribution d'énergie permettant d'optimiser la gestion de l'énergie générée par la source d'énergie de chaque bâtiment pour éviter les pertes.

Un autre objet de la présente invention est de fournir un système qui minimise la consommation d'énergie électrique provenant du réseau public.

Ces objets sont au moins partiellement atteints par la présente invention.

La présente invention concerne un système de distribution d'énergie électrique entre bâtiments pour gérer la distribution d'énergie électrique entre au moins deux bâtiments distincts,
- le système comprenant un réseau domestique dans chaque bâtiment, chaque réseau domestique étant connecté à un réseau local, ledit réseau local étant connecté à un réseau public,
- le système comprenant dans chaque bâtiment
   ∘ une source d'énergie domestique pour alimenter le réseau domestique,
   ∘ un onduleur relié à ladite source d'énergie pour convertir le courant DC généré par ladite source d'énergie en courant AC,
   ∘ une batterie pour stocker l'énergie domestique et la distribuer dans le réseau domestique, la batterie étant alimentée par l'onduleur, et
   ∘ au moins un équipement fonctionnant grâce à l'énergie du réseau domestique,
le système comprenant d'une part un module domestique dans chaque bâtiment et d'autre part un module central connecté à chaque module domestique,
- ledit module domestique permettant de réguler le flux d'énergie circulant dans le réseau domestique entre la source, l'onduleur, la batterie et ledit équipement en fonction du ratio défini par l'énergie disponible Ed et l'énergie consommée Ec sur ledit réseau domestique, ledit module domestique étant configuré pour calculer ledit ratio et transmettre ledit ratio au module central,
- ledit module central étant arrangé pour réguler le flux d'énergie entre les bâtiments en fonction des ratios Ed/Ec transmis par chaque module domestique de façon à permettre un échange d'énergie entre un réseau domestique en excès et un réseau domestique en déficit.

Dans la présente invention, chaque module domestique régule le flux d'énergie d'un réseau domestique. Par exemple, le module réparti l'énergie disponible vers les équipements du réseau. Le module domestique calcule le ratio Ed/Ec et transmet cette information au module central.

Le module central gère l'alimentation en énergie de chaque réseau domestique. Par exemple, le module central contrôle la source d'énergie et la batterie de chaque bâtiment. Si un module domestique communique au module central un déficit d'énergie, le module central exécute les actions nécessaires pour palier à ce déficit. Par exemple, un déficit en énergie est définit par un ratio Ed/Ec inférieur à zéro. Autrement dit, le module central utilise les informations fournies par les modules domestiques pour réguler le flux d'énergie entre le réseau local et les réseaux domestiques.

Le module central régule les flux d'énergie entre les réseaux domestiques. Si un réseau est déficitaire en énergie et un autre réseau domestique est au contraire en excès, le module central permet un transfert entre le réseau domestique en excès et le réseau domestique en déficit.

Le module central commande le transfert d'énergie en excès vers le réseau déficitaire. Le transfert d'énergie peut avoir lieu entre réseaux domestiques. Le transfert peut avoir lieu entre batteries, c'est-à-dire entre la batterie d'un réseau domestique en excès d'énergie et la batterie du réseau domestique en déficit.

Alternativement, le transfert peut avoir lieu entre la batterie d'un réseau en excès et un équipement connecté à un réseau domestique en déficit.

Alternativement, le transfert peut avoir lieu entre la source d'énergie d'un réseau en excès et la batterie d'un réseau en déficit.

Ainsi, la présente invention permet d'utiliser l'énergie disponible dans le réseau local pour satisfaire les besoins des réseaux domestiques connectés sur le réseau local. Avantageusement, cela permet d'obtenir un système autosuffisant en énergie. Par ailleurs, cela permet de palier les coupures d'électricité en cas de panne de courant du réseau public.

Dans un mode de réalisation, ledit module central permet de réguler le flux d'énergie entre le réseau local et le réseau public, de sorte que, lorsque le réseau local est déficitaire en énergie, ledit module central permet une entrée d'énergie depuis le réseau public vers le réseau local.

Selon un mode de réalisation, ledit module central permet de réguler le flux d'énergie entre le réseau local et le réseau public, de sorte que, lorsque le réseau local est en excès d'énergie, ledit module central permet une sortie d'énergie du réseau local vers réseau public.

Lorsque le réseau local ne permet pas de répondre aux besoins d'un ou plusieurs réseaux domestiques, le module central active le transfert d'énergie entre le réseau public et le réseau local puis commande le module domestique concerné pour introduire l'énergie dans le réseau domestique en déficit. Inversement, lorsque le réseau local est en excès d'énergie, le module de commande peut commander un transfert d'énergie depuis le réseau local vers le réseau public. Cela permet de résoudre les problèmes de stockage de l'énergie produite par les sources d'énergie des bâtiments des réseaux domestiques. La présente invention permet par conséquent de produire de l'énergie.

Dans un mode de réalisation, la source d'énergie domestique est une source d'énergie renouvelable, par exemple choisie parmi le solaire, l'éolien, la géothermie, la biomasse, de préférence les panneaux photovoltaïques.

Selon un mode de réalisation, lesdites batteries sont choisies parmi les batteries au lithium, les batteries au plomb, de préférence les batteries au lithium.

Dans un mode de réalisation, lequel ledit équipement est choisi parmi une liste comprenant une pompe à chaleur, un véhicule électrique, un luminaire, un store, un système de ventilation, un système de chauffage et/ou refroidissement, un équipement multimédia de type téléviseur ou ordinateur, un dispositif de sécurité de type alarme, ou une combinaison de ces équipements.

Avantageusement, les équipements sont connectés à des prises commandées. Par exemple, les équipements sont interconnectés via un bus de communication ou via des prises électriques.

De manière avantageuse, la présente invention comprend une pompe à chaleur de type smartgrid ready, autrement dit une pompe à chaleur commandable par un module central qui contrôle son fonctionnement, notamment la plage horaire de fonctionnement.

Dans un mode de réalisation, lesdites batteries ont des capacités comprises entre 10 et 100 kWh.

Selon un mode de réalisation, lesdits bâtiments sont choisis parmi les maisons individuelles, les immeubles comprenant plusieurs logements.

Dans la présente invention, les éléments constituants le système communiquent entre eux en utilisant un ou plusieurs protocoles.

Par exemple, chaque module domestique utilise un protocole domotique, par exemple KNX, pour la communication entre les équipements. Avantageusement, la présente invention utilise un protocole particulier pour assurer la communication entre les équipements techniques comme par exemple la ventilation, le chauffage, le compteur d'eau ou d'énergie, par exemple un protocole ModBUS.

Avantageusement, les protocoles sont tous intégrés dans le module domestique qui commande les équipements. Ainsi, les informations relatives aux équipements, notamment leur besoins en énergie, sont centralisées au niveau du module domestique. Le module domestique communique ces informations au module central qui régule le flux d'énergie en fonction desdites informations.

La présente invention concerne également une méthode de distribution d'énergie électrique entre bâtiments pour gérer la distribution d'énergie électrique entre au moins deux bâtiments distincts, la méthode comprenant :
- i) fournir un système selon la présente invention;
- ii) configurer le module domestique de chaque bâtiment de façon à calculer le ratio entre l'énergie disponible Ed et l'énergie consommée Ec sur chaque réseau domestique;
- iii) fournir au module central le ratio Ed/Ec de chaque module domestique ;
- iv) configurer le module central en fonction des ratios Ed/Ec de chaque module domestique pour permettre une régulation des flux d'énergie entre le réseau domestique de chaque bâtiment et le réseau local, de sorte que, pour chaque bâtiment,
   ∘ iv)a) lorsque Ed est supérieure à Ec, le module central active le module domestique du bâtiment pour permettre une sortie de l'excès d'énergie depuis le réseau domestique dudit bâtiment vers le réseau local ; ou
   ∘ iv)b) lorsque Ed est égale à Ec, le module central contrôle le module domestique du bâtiment pour bloquer le flux d'énergie entre le réseau domestique dudit bâtiment et le réseau local ; ou
   ∘ iv)c) lorsque Ed est inférieure à Ec, le module central active le module de gestion domestique du bâtiment pour permettre une entrée d'énergie depuis le réseau local vers le réseau domestique dudit bâtiment déficitaire en énergie;

Les avantages de la méthode selon la présente invention sont similaires à ceux du système et ne seront par conséquent pas répétés ici.

Selon un mode de réalisation, l'excès d'énergie d'un réseau domestique est utilisé pour charger la batterie d'un réseau domestique en déficit ou pour alimenter un réseau domestique en déficit.

Dans un mode de réalisation, l'excès d'énergie d'un réseau domestique est introduit dans le réseau local puis dans le réseau public.

Selon un mode de réalisation, le module central est configuré pour activer l'entrée d'énergie électrique dans au moins un des réseaux domestiques en déficit sur une plage horaire prédéterminée.

Dans un mode de réalisation, le module central est configuré pour compenser un réseau domestique déficitaire, par exemple charger une batterie déficitaire, en fonction :
- de paramètres météorologiques ; et/ou
- de l'énergie excédentaire disponible dans un autre réseau domestique ;

Selon un mode de réalisation, lorsqu'un réseau domestique est déficitaire, le module central est configuré pour utiliser de façon prioritaire de l'énergie excédentaire d'un autre réseau domestique. Si l'énergie disponible sur le réseau local n'est pas disponible en quantité suffisante pour pallier le déficit, le module central utilise le réseau public pour compléter la fourniture d'énergie.

L'invention concerne également une méthode mise en oeuvre par ordinateur, dans laquelle la méthode utilise un programme d'ordinateur pour exécuter les étapes de la méthode selon l'invention.

L'invention concerne aussi un programme d'ordinateur comprenant les instructions qui, lorsque le programme est exécuté par un ordinateur, permettent de commander un système selon l'invention. De préférence, ledit programme est arrangé pour commander le module central de façon à réguler le flux d'énergie entre les bâtiments et permettre un échange d'énergie entre un réseau domestique en excès et un réseau domestique en déficit.

Le programme d'ordinateur peut être stocké dans le module central. Alternativement, le programme peut être stocké sur un serveur ou cloud.

Dans la présente invention, les termes « module domestique » définissent un module de gestion de l'énergie électrique du réseau domestique. Par exemple, le module domestique peut être composé d'un compteur électrique intelligent et d'équipement(s) de communication avec le système de production et de stockage de l'énergie renouvelable.

Dans la présente invention, les termes « module central » définissent un module de gestion de l'énergie électrique du réseau local. Par exemple, le module domestique peut être un EMS pour Energie Management System. Par exemple, le module central peut être un EMS composé d'un automate/ordinateur, d'un ou plusieurs modules de communication et d'un compteur électrique intelligent.

Les modes de réalisations décrits pour le système selon la présente invention s'appliquent également à la méthode selon l'invention, à la méthode mise en oeuvre par ordinateur et au programme d'ordinateur, mutatis mutandis.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels
- La figure 1 représente trois cas de figures pour un bâtiment ;
- La figure 2 représente trois cas de figures au niveau d'un ensemble de bâtiments ;

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse. On note dès à présent que les figures ne sont pas à l'échelle.

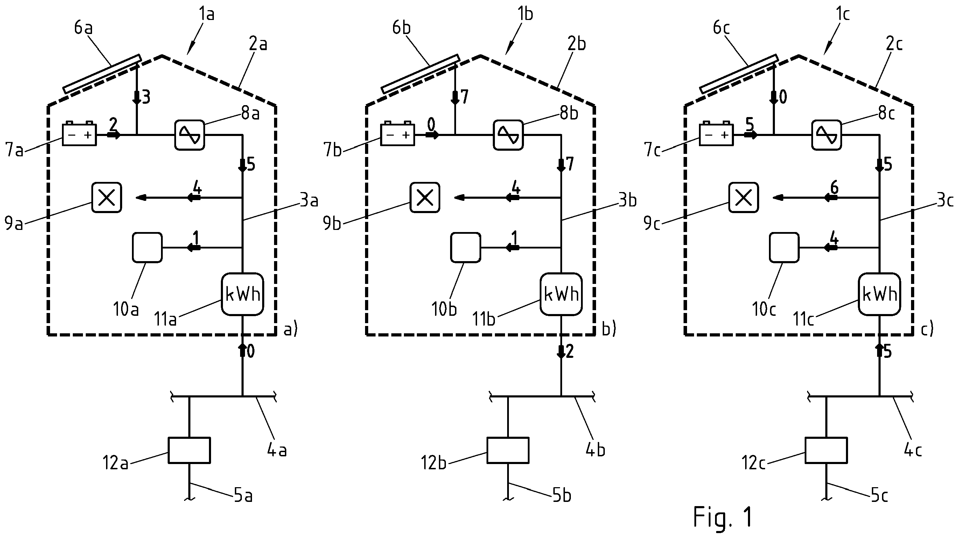

Les figures 1a,b,c représentent trois situations possibles pour chaque bâtiment 2a,b,c d'un système 1a,b,c selon l'invention. Les figures 1a,b,c représentent chacune un bâtiment 2a,b,c d'un système, le système n'étant pas illustré en totalité dans la figure 1.

Le bâtiment 2a,b,c comprend un réseau domestique 3a,b,c connecté à un réseau local 4a,b,c, ledit réseau local 4a,b,c étant connecté à un réseau public 5a,b,c.

Chaque bâtiment 2a,b,c comprend des panneaux photovoltaïques 7a,b,c comme source d'énergie pour alimenter le réseau domestique 3a,b,c.

Le réseau domestique 3a,b,c comprend une batterie au lithium 7a,b,c connectée à un onduleur 8 a,b,c pour fournir de l'énergie électrique au réseau domestique 3a,b,c.

L'énergie du réseau domestique 3a,b,c permet d'alimenter des équipements 9a,b,c, par exemple une pompe à chaleur 10a,b,c.

Chaque bâtiment 2a,b,c comprend en outre un module domestique 11 a,b,c pour réguler le flux d'énergie circulant dans le réseau domestique 3a,b,c. Chaque module domestique est connecté à un module central 12 a,b,c qui contrôle l'approvisionnement en énergie électrique du réseau domestique 3a,b,c.

Sur les figures 1a,b,c, les flèches indiquent un flux d'énergie, chaque flèche étant accompagnée d'un chiffre renseignant l'intensité du flux.

Sur la figure 1a, le bâtiment 2a est dans un cas idéal d'autosuffisance car il n'y a aucun échange d'énergie nécessaire entre le réseau domestique 3a et le réseau local 4a. L'énergie disponible Ed des panneaux solaire 6a et dans la batterie 7a correspond à l'énergie consommée Ec des équipements du bâtiment 2a. La somme des intensités produites (3 + 2 = 5), correspond aux intensités nécessaires pour les équipements 9a et 10a (respectivement 4 et 1), le ratio Ed/Ec est nul.

Dans le cas représenté sur la figure 1a, le module central 12a bloque le flux d'énergie entre le réseau domestique 3a et le réseau local 4a.

Sur la figure 1b, l'énergie disponible Ed est supérieure à l'énergie consommée Ec, le ratio Ed/Ec=2. Le réseau domestique 3b est ainsi excédentaire. Le module central 12b permet une sortie de l'énergie en excès depuis le réseau domestique 3b vers le réseau local 3c. Cette énergie excédentaire peut être utilisée pour compenser un réseau domestique déficitaire du réseau local. Si l'ensemble des réseaux domestiques est autosuffisant ou également en excès, le module central 12b peut permettre d'introduire l'énergie en excès dans le réseau public 5b.

Sur la figure 1c, l'énergie disponible Ed est inférieure à l'énergie consommée Ec, le ratio Ed/Ec=-5. Le réseau domestique 3c est ainsi déficitaire. Le module central 12c permet une entrée de l'énergie depuis le réseau local 4c. Cette énergie introduite dans le réseau domestique 3c peut provenir d'un réseau domestique en excès du réseau local. Si l'ensemble des réseaux domestiques est autosuffisant ou également en déficit, le module central 12c introduit de l'énergie du réseau public 5c dans le réseau local 4c puis dans le réseau domestique 3c pour satisfaire les besoins en énergie du réseau domestique 3c.

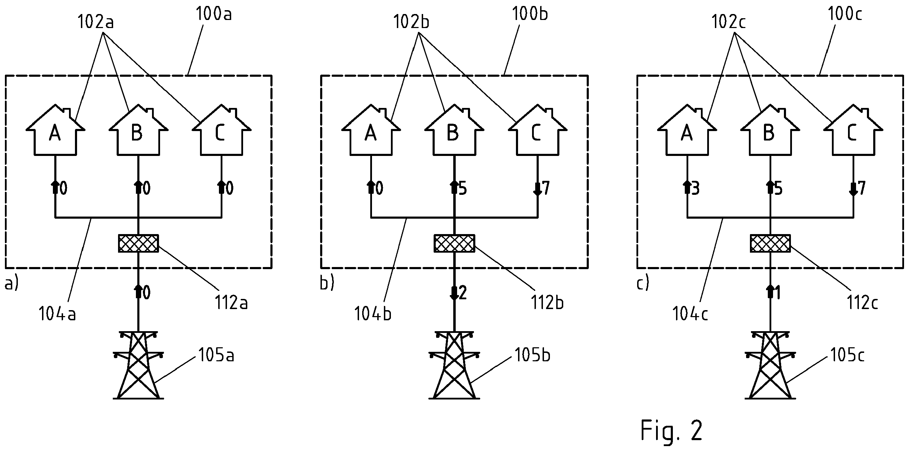

Les figures 2a,b,c représentent trois situations possibles pour un système 100a,b,c selon l'invention.

Chaque système 100a,b,c comprend trois bâtiments 102a,b,c dont les réseaux domestiques (non représentés sur les figures 2a,b,c) sont connectés sur un réseaux local 104a,b,c, ledit réseau local 104a,b,c étant connecté sur un réseau public 105a,b,c. Chaque système 100a,b,c comprend en également un module central 112a,b,c.

Comme pour les figures 1a,b,c, les flèches indiquent un flux d'énergie, chaque flèche étant accompagnée d'un chiffre renseignant l'intensité du flux.

Dans le cas représenté sur la figure 2a, le système 100a est autosuffisant, autrement dit chaque bâtiment 102a a un ratio Ed/Ec nul. Les besoins du système 100a sont assurés uniquement par l'énergie disponible sur le réseau local 104a.

Dans le cas représenté sur la figure 2b, le réseau local 104b du système 100b présente un solde excédentaire de +2 (7-5 = 2) qui peut être introduit dans le réseau public 105b puisque aucun des bâtiments 102b n'est en déficit d'énergie. Dans ce mode de réalisation, le déficit en énergie d'un bâtiment est comblé par l'excès d'énergie d'un autre bâtiment.

Dans le cas représenté sur la figure 2c, la situation est à l'opposé de celle représentée sur la figure 2b. Le réseau local 104c du système 100c présente un solde déficitaire de -1 (-3-5+7=-1). Le module central 112c autorise ainsi une entrée d'énergie depuis le réseau public 105c pour combler le déficit énergétique du système 100c.Dans ce mode de réalisation, le réseau local 104c ne dispose pas des ressources en énergies suffisantes pour couvrir les besoins du réseau local 104c, c'est-à-dire des réseaux domestiques connectés sur le réseau local 104c. Dans ce cas, le système 100c est configuré pour autoriser une entrée d'énergie depuis le réseau public 105c pour éviter la coupure d'électricité.

### NUMÉRO DE RÉFÉRENCES

- 1a,b,c: Système selon l'invention
- 2a,b,c: Bâtiment d'un système selon l'invention
- 3a,b,c: Réseau domestique
- 4a,b,c: Réseau local
- 5a,b,c: Réseau public
- 6a,b,c: Panneaux photovoltaïques
- 7a,b,c: Batterie au lithium
- 8a,b,c: Onduleur
- 9a,b,c: Équipement
- 10 a,b,c: Pompe à chaleur
- 11a,b,c: Module domestique
- 12 a,b,c: Module central

- 100a,b,c: Système selon l'invention
- 102a,b,c: Bâtiment d'un système selon l'invention
- 104a,b,c: Réseau local
- 105a,b,c: Réseau public
- 112 a,b,c: Module central

## Revendications

1. Système de distribution d'énergie électrique (1a,b,c;100a,b,c) entre bâtiments pour gérer la distribution d'énergie électrique entre au moins deux bâtiments (2a,b,c;102a,b,c) distincts,
- le système (1a,b,c;100a,b,c) comprenant un réseau domestique (3a,b,c;103a,b,c) dans chaque bâtiment (2a,b,c ;102a,b,c), chaque réseau domestique (3a,b,c;103a,b,c) étant connecté à un réseau local (4a,b,c;104a,b,c), ledit réseau local (4a,b,c;104a,b,c) étant connecté à un réseau public (5a,b,c;105a,b,c),
- le système (1a,b,c;100a,b,c) comprenant dans chaque bâtiment (2a,b,c;102a,b,c)
• une source d'énergie domestique (6a,b,c) pour alimenter le réseau domestique (3a,b,c;103a,b,c),
• un onduleur (8a,b,c) relié à ladite source d'énergie (6a,b,c) pour convertir le courant DC généré par ladite source d'énergie (6a,b,c) en courant AC,
• une batterie (7a,b,c) pour stocker l'énergie domestique et la distribuer dans le réseau domestique (3a,b,c ;103a,b,c), la batterie (7a,b,c) étant alimentée par l'onduleur (8a,b,c), et
• au moins un équipement (9a,b,c) fonctionnant grâce à l'énergie du réseau domestique (3a,b,c;103a,b,c),
le système (1a,b,c;100a,b,c) comprenant d'une part un module domestique (11a,b,c) dans chaque bâtiment (2a,b,c ;102a,b,c) et d'autre part un module central (12a,b,c ;112a,b,c) connecté à chaque module domestique (11a,b,c),
- ledit module domestique (11a,b,c) permettant de réguler le flux d'énergie circulant dans le réseau domestique (3a,b,c ;103a,b,c) entre la source (6a,b,c), l'onduleur (8a,b,c), la batterie (7a,b,c) et ledit équipement (9a,b,c) en fonction du ratio défini par l'énergie disponible Ed et l'énergie consommée Ec sur ledit réseau domestique (3a,b,c ;103a,b,c), ledit module domestique (11a,b,c) étant configuré pour calculer ledit ratio et transmettre ledit ratio au module central (12a,b,c ;112a,b,c),
- ledit module central (12a,b,c ;112a,b,c) étant arrangé pour réguler le flux d'énergie entre les bâtiments (2a,b,c ;102a,b,c) en fonction des ratios Ed/Ec transmis par chaque module domestique (11a,b,c) de façon à permettre un échange d'énergie entre un réseau domestique (3a,b,c ;103a,b,c) en excès et un réseau domestique (3a,b,c ;103a,b,c) en déficit.

2. Système (1a,b,c ;100a,b,c) selon la revendication 1, dans lequel ledit module central (12a,b,c ;112a,b,c) permet de réguler le flux d'énergie entre le réseau local (4a,b,c ;104a,b,c) et le réseau public (5a,b,c ;105a,b,c), de sorte que, lorsque le réseau local (4a,b,c ;104a,b,c) est déficitaire en énergie, ledit module central (12a,b,c ;112a,b,c) permet une entrée d'énergie depuis le réseau public (5a,b,c ;105a,b,c) vers le réseau local (4a,b,c ;104a,b,c).

3. Système (1a,b,c ;100a,b,c) selon l'une des revendications 1 ou 2, dans lequel ledit module central (12a,b,c ;112a,b,c) permet de réguler le flux d'énergie entre le réseau local (4a,b,c ;104a,b,c) et le réseau public (5a,b,c ;105a,b,c), de sorte que, lorsque le réseau local (4a,b,c ;104a,b,c) est en excès d'énergie, ledit module central (12a,b,c ;112a,b,c) permet une sortie d'énergie du réseau local (4a,b,c ;104a,b,c) vers réseau public (5a,b,c ;105a,b,c).

4. Système (1a,b,c ;100a,b,c) selon l'une des revendications 1 à 3, dans lequel la source d'énergie (6a,b,c) est une source d'énergie renouvelable, par exemple choisie parmi le solaire, l'éolien, la géothermie, la biomasse, de préférence les panneaux photovoltaïques.

5. Système (1a,b,c ;100a,b,c) selon l'une des revendications 1 à 4, dans lequel lesdites batteries (7a,b,c) sont choisies parmi les batteries au lithium, les batteries au plomb, de préférence les batteries au lithium.

6. Système (1a,b,c ;100a,b,c) selon l'une des revendications 1 à 5, dans lequel ledit équipement (9a,b,c) est choisi parmi une liste comprenant une pompe à chaleur (10a,b,c), un véhicule électrique, un luminaire, un store, un système de ventilation, un système de chauffage et/ou refroidissement, un équipement multimédia de type téléviseur ou ordinateur, un dispositif de sécurité de type alarme, ou une combinaison de ces équipements.

7. Méthode de distribution d'énergie électrique entre bâtiments pour gérer la distribution d'énergie électrique entre au moins deux bâtiments (2a,b,c ;102a,b,c) distincts, la méthode comprenant :
- i) fournir un système (1a,b,c ;100a,b,c) selon l'une des revendications 1 à 6 ;
- ii) configurer le module domestique (11a,b,c) de chaque bâtiment (2a,b,c ;102a,b,c) de façon à calculer le ratio entre l'énergie disponible Ed et l'énergie consommée Ec sur chaque réseau domestique (3a,b,c ;103a,b,c);
- iii) fournir au module central (12a,b,c;112a,b,c) le ratio Ed/Ec de chaque module domestique (11a,b,c) ;
- iv) configurer le module central (12a,b,c;112a,b,c) en fonction des ratios Ed/Ec de chaque module domestique (11a,b,c) pour permettre une régulation des flux d'énergie entre le réseau domestique (3a,b,c ;103a,b,c) de chaque bâtiment (2a,b,c;102a,b,c) et le réseau local (4a,b,c;104a,b,c), de sorte que, pour chaque bâtiment (2a,b,c;102a,b,c),
- a) lorsque Ed est supérieure à Ec, le module central (12a,b,c;112a,b,c) permet une sortie de l'excès d'énergie depuis le réseau domestique (3a,b,c;103a,b,c) dudit bâtiment (2a,b,c;102a,b,c) vers le réseau local (4a,b,c;104a,b,c) ; ou
- b) lorsque Ed est égale à Ec, le module central bloque le flux d'énergie entre le réseau domestique (3a,b,c;103a,b,c)dudit bâtiment (2a,b,c;102a,b,c) et le réseau local (4a,b,c;104a,b,c) ; ou
- c) lorsque Ed est inférieure à Ec, le module central (12a,b,c ;112a,b,c) permet une entrée d'énergie depuis le réseau local (4a,b,c ;104a,b,c) vers le réseau domestique (3a,b,c ;103a,b,c) dudit bâtiment (2a,b,c ;102a,b,c) déficitaire en énergie;

8. Méthode selon la revendication 7, dans laquelle l'excès d'énergie d'un réseau domestique (3a,b,c ;103a,b,c) est utilisé pour charger la batterie d'un réseau domestique (3a,b,c ;103a,b,c) en déficit ou pour alimenter un réseau domestique en déficit.

9. Méthode selon la revendication 7 ou 8, dans laquelle l'excès d'énergie d'un réseau domestique (3a,b,c ;103a,b,c) est introduit dans le réseau local (4a,b,c ;104a,b,c) puis dans le réseau public (5a,b,c ;105a,b,c).

10. Méthode selon l'une des revendications 7 à 9, dans laquelle le déficit d'énergie d'un réseau domestique (3a,b,c ;103a,b,c) est comblé au moins en partie par une entrée d'énergie depuis le réseau public (5a,b,c ;105a,b,c).

11. Méthode selon l'une des revendications 7 à 10, dans laquelle le module central (12a,b,c ;112a,b,c) est configuré pour activer l'entrée d'énergie électrique dans au moins un des réseaux domestiques (3a,b,c ;103a,b,c) en déficit sur une plage horaire prédéterminée.

12. Méthode selon l'une des revendications 7 à 11, dans laquelle le module central (12a,b,c ;112a,b,c) est configuré pour compenser un réseau domestique (3a,b,c ;103a,b,c) déficitaire en fonction :
- de paramètres météorologiques ; et/ou
- de l'énergie excédentaire disponible dans un autre réseau domestique (3a,b,c ;103a,b,c) ;

13. Méthode selon l'une des revendications 7 à 12, dans laquelle, lorsqu'un réseau domestique (3a,b,c ;103a,b,c) est déficitaire, le module central (12a,b,c ;112a,b,c) est configuré pour utiliser de façon prioritaire de l'énergie excédentaire d'un autre réseau domestique (3a,b,c;103a,b,c).

14. Méthode mise en oeuvre par ordinateur, dans laquelle la méthode utilise un programme d'ordinateur pour exécuter les étapes de la méthode selon l'une des revendications 7 à 13.

15. Programme d'ordinateur comprenant les instructions qui, lorsque le programme est exécuté par un ordinateur, permettent de commander un système (1a,b,c ;100a,b,c) selon l'une des revendications 1 à 6, ledit programme étant arrangé pour commander le module central (12a,b,c ;112a,b,c) de façon à réguler le flux d'énergie entre les bâtiments (2a,b,c ;102a,b,c) et permettre un échange d'énergie entre un réseau domestique (3a,b,c ;103a,b,c) en excès et un réseau domestique (3a,b,c ;103a,b,c) en déficit.
